# EUROPÄISCHE PATENTSCHRIFT

(11) **EP 0 925 145 B1**
(45) Veröffentlichungstag und Bekanntmachung des Hinweises auf die Patenterteilung: **22.11.2000**
(21) Anmeldenummer: 97932838.2
(22) Anmeldetag: 18.07.1997
(51) Int. Cl.: B23Q 1/54

(54) **HEXAPOD-BEARBEITUNGSZENTRUM**
HEXAPODE MACHINING CENTRE
CENTRE D'USINAGE EN HEXAPODE

(30) Priorität: 05.09.1996 DE 19636100
(43) Veröffentlichungstag der Anmeldung: 30.06.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: WIELAND, Frank, D-09113 Chemnitz (DE); SCHWAAR, Michael, D-09232 Hartmannsdorf (DE); NEUGEBAUER, Reimund, D-01189 Dresden (DE)
(74) Vertreter: Grünecker, Kinkeldey, Stockmair & Schwanhäusser Anwaltssozietät
(86) Internationale Anmeldenummer: EP9703861
(87) Internationale Veröffentlichungsnummer: WO9809769

(56) Entgegenhaltungen:
- EP-A- 0 674 969
- US-A- 5 354 158
- US-A- 5 401 128

## Beschreibung

Die vorliegende Erfindung betrifft das Gebiet der Hexapod-Bearbeitungszentren mit einem feststehenden Gestell und mit einem Träger, die über sechs in ihrer Länge verstellbare Streben miteinander verbunden sind. Insbesondere betrifft die Erfindung ein Hexapod-Bearbeitungszentrum mit den Merkmalen des Oberbegriffes von Patentanspruch 1 (siehe US-A-5 401 128).

Derartige Hexapod-Bearbeitungszentren werden als Werkzeugmaschinenstrukturen eingesetzt. Sie eignen sich insbesondere für Maschinen zur spanenden Bearbeitung, wie z.B. zum Fräsen, Bohren, Drehen oder Schleifen oder zur Laserbearbeitung. Solche Maschinenstrukturen können auch für Koordinatenmeßmaschinen und auf dem Gebiet der Handhabungstechnik eingesetzt werden.

Hexapod-Bearbeitungszentren bestehen prinzipiell aus einem bisweilen auch als Arbeitsplattform bezeichneten Träger und einem feststehenden Gestell, die miteinander durch sechs in ihrer Länge verstellbare Streben verbunden sind. Dies ermöglicht eine Bewegung der Arbeitsplattform in allen sechs Raumfreiheitsgraden, d.h. drei translatorischen Freiheitsgraden und drei rotatorischen Freiheitsgraden.

Ein erstes Hexapod-Bearbeitungszentrum ist aus der US-A-5,401,128 bekannt. Diese bekannte Werkzeugmaschinenstruktur besteht aus einem Maschinenrahmen in Oktaederform, der zwölf starre Verstrebungen aufweist. Im Zentrum des Maschinenrahmens ist eine Bearbeitungseinheit mit einer Spindel angeordnet. Weiterhin ist im unteren Teil des oktaederförmigen Maschinenrahmens eine feststehende Werkstückaufnahmevorrichtung angeordnet. Oberhalb der Werkstückaufnahmevorrichtung ist das Hexapod, d.h. ein Träger- bzw. eine Arbeitsplattform für die Bearbeitungseinheit, z.B. eine Bohroder Frässpindel vorgesehen. Jeweils zwei in ihrer Länge verstellbare Streben des Hexapods sind mit einem Ende an einer Ecke eines dreieckförmigen oberen Rahmenteils des Maschinenrahmens gelenkig angebracht, wobei die Anlenkpunkte der beiden Streben am Maschinenrahmen in ihrer Höhe nur geringfügig voneinander beabstandet sind. Die Anlenkpunkte der sechs Streben an der Arbeitsplattform liegen alle in einer gemeinsamen Ebene. Diese Anordnung bedingt eine Einschränkung der rotatorischen Bewegungen. Zudem ist die Aufnahme der Kräfte in den Streben nicht optimal, da diese nicht in den Hauptbelastungsrichtungen verlaufen.

Ein weiteres Hexapod-Bearbeitungszentrum ist aus der US-A-5,354,158 bekannt. Bei dem dort gezeigten Hexapod sind jeweils zwei benachbarte Streben an einer Ecke eines gedachten Dreieckes an der Arbeitsplattform und jeweils zwei andere benachbarte Streben an der Ecke eines weiteren gedachten Dreiecks an dem Gestell angelenkt, wobei die beiden parallel zueinander angeordneten Dreiecke gegeneinander verdreht sind. Die Anlenkpunkte der Streben an der Arbeitsplattform sowie an dem Gestell sind jeweils in einer gemeinsamen Ebene angelenkt. Zudem ist aus der US-A-5,354,158 bekannt, die Anlenkpunkte an dem Gestell in zwei voneinander beabstandeten Ebenen anzuordnen. Diese Anordnung weist hinsichtlich der Beweglichkeit der Arbeitsplattform und der Kraftaufnahme ähnliche Nachteile auf wie die Anordnung gemäß US-A-5,401,128.

WO-A-97/25180 (Stand der Technik nach Art. 54(3) EPÜ) zeigt ein Hexapod-Bearbeitungszentrum mit einem feststehenden Gestell und mit einem Träger, die über sechs in ihrer Länge verstellbare Streben miteinander verbunden sind, wobei an dem Träger sechs separate Anlenkpunkte für die Streben vorgesehen sind, wobei drei Anlenkpunkte von drei Streben an dem Träger eine erste Angriffsebene bilden, und die drei Anlenkpunkte der drei weiteren Streben an dem Träger eine weitere, separate Angriffsebene bilden, wobei die beiden Angriffsebenen voneinander beabstandet sind, und wobei die Anlenkpunkte von drei Streben der ersten Trägerangriffsebene an dem Gestell eine Angriffsebene bilden und die Anlenkpunkte der drei Streben der weiteren Trägerangriffsebene eine weitere separate Angriffsebene an dem Gestell bilden.

Der vorliegenden Erfindung liegt daher die Aufgabe zugrunde, bei einem Hexapod-Bearbeitungszentrum der eingangs genannten Art die Beweglichkeit des Trägers in allen sechs Freiheitsgraden, insbesondere in den drei rotatorischen Freiheitsgraden, zu verbessern und die Kraftaufnahme zu optimieren.

Diese Aufgabe wird durch ein Hexapod-Bearbeitungszentrum mit den Merkmalen des Patentanspruches 1 gelöst.

Hierdurch wird eine größere Bewegungsfreiheit der Arbeitsplattform erzielt, da die Gelenke der Streben an den Anlenkpunkten an dem Träger einander nicht stören. Insbesondere wird hierdurch eine höhere Bewegungsfreiheit in den Drehfreiheitsgraden erzielt. Das Hexapod-Bearbeitungszentrum kann daher auch für kompaktere Träger bzw. kleinere Maschinen eingesetzt werden.

Das Auseinanderliegen der Anlenkpunkte an dem Träger führt zudem zu einer Verbesserung der Steifigkeit der Abstützung des Trägers und ermöglicht daher eine erhöhte, mit dem Bearbeitungszentrum erzielbare Fertigungsgenauigkeit.

An dem Träger kann eine Bearbeitungseinheit und/oder Sensorik zur Positionserfassung angebracht werden. Die Bearbeitungseinheit kann eine Spindel tragen, wobei eine gewünschte Raumlage der Spindel je nach Bedarf, z.B. horizontal oder vertikal, vorgesehen wird. Der Aufbau des Gestells wird hierzu entsprechend angepaßt.

Gemäß einer vorteilhaften Weiterbildung der Erfindung erfolgt die Aufhängung der Streben im Gestell so, daß die Anlenkpunkte von jeweils drei Streben an dem Gestell insgesamt zwei separate Angriffsebenen bilden. Diese Anordnung der Streben trägt zu einer höheren Beweglichkeit, insbesondere in den rotatorischen Freiheitsgraden sowie zu einer Vergleichmäßigung der Kraftaufnahme bei. Außerdem wird hierdurch eine besonders bauraumökonomische Anordnung ermöglicht, da durch die Verteilung der Anlenkpunkte an dem Träger wie an dem Gestell für die Gestaltung der jeweiligen Gelenke in den Anlenkpunkten mehr Raum zur Verfügung steht. Hierdurch wird der konstruktive Gestaltungsfreiraum erhöht, bzw. eine kompaktere Bauweise ermöglicht.

Vorzugsweise sind die Anlenkpunkte der Streben an der Arbeitsplattform auf einem gedachten Vielflächner, z.B. einen Würfel oder Quader, oder auch auf einer gedachten Kugel angeordnet. Hierdurch wird die Verteilung der Belastung auf die einzelnen Streben vergleichmäßigt, ohne daß die einzelnen Streben einander im Raum stören und die Beweglichkeit des Trägers einschränken. Der Träger selbst kann hierbei eine beliebige Form aufweisen und beispielsweise auch als im wesentlichen zylindrischer Körper ausgebildet sein, der die Bearbeitungseinheit trägt, wobei die Anlenkpunkte der einzelnen Streben den Anlenkpunkten an dem gedachten Vielflächner bzw. der Kugel entsprechen. Zur Vergleichmäßigung des Kraftangriffes ist auf jeder der sechs Flächen eines gedachten Würfels ein Anlenkpunkt vorgesehen. Eine besonders gute Vergleichmäßigung des Kraftangriffes wird durch die Anordnung der Anlenkpunkte im Flächenmittelpunkt der jeweiligen Fläche des gedachten Würfels erzielt.

Vorzugsweise sind die Anlenkpunkte der Streben an dem Gestell jeweils an je einer Außenkante eines gedachten räumlichen Vielflächners, z.B. eines Würfels oder eines Quaders, angeordnet. Hierdurch wird die Krafteinleitung in das Gestell vergleichmäßigt. Das Gestell selbst muß dabei nicht notwendigerweise in der Gestalt eines Würfels oder einer Kugel ausgebildet sein, sondern kann eine beliebige Maschinenstruktur, beispielsweise in Fachwerkkonstruktion, sein. Wesentlich hierbei ist, daß die Anlenkpunkte zueinander in den entsprechenden Positionen verbleiben. Vorzugsweise sind gegenüberliegende Flächen an dem Träger über jeweils eine Streben mit parallen Außenkanten des Gestells verbunden. Dabei können die Außenkanten eines gedachten Gestellwürfels oder -quaders benachbarten Kanten oder einander gegenüberliegende Kanten sein.

Durch eine symmetrische Anordnung von zwei einander gegenüberliegenden Streben bezüglich ihrer Aufhängung im Gestell und ihrer Anlenkung an dem Träger kann der Steuerungsaufwand zur Durchführung von Bewegungen des Trägers verringert werden.

Gemäß einer Weiterbildung der Erfindung weist der Träger eine Hauptspindel auf, die entlang einer Hauptdiagonalen des Trägers, z.B. durch die gegenüberliegenden Ecken eines gedachten Würfels angeordnet ist. Da an einer Ecke eines Würfels oder eines Quaders drei Flächen zusammenkommen, ermöglicht die Ausrichtung der Spindel entlang einer Hauptdiagonalen eine Dreibeinabstützung an diesen drei Flächen und somit eine optimale Kraftaufnahme und Beweglichkeit des Trägers. Durch die weitere Abstützung an den drei verbleibenden Würfel- bzw. Quaderflächen wird die Lage der Spindelachse stabilisiert.

Vorzugsweise wird die Spindel des Trägers in einer Ruhestellung parallel zu einer Raumachse des Werkstückkoordinatensystems ausgerichtet. Dies ermöglicht eine Vereinfachung der Koordinatentransformationen bei der Bestimmung der zu einer Bewegung des Trägers erforderlichen Bewegungen der in ihrer Länge gesteuert verstellbaren Streben.

Weitere vorteilhafte Weiterbildungen der Erfindung sind den Unteransprüchen zu entnehmen.

Im folgenden wird nun die Erfindung anhand von Ausführungsbeispielen und unter Bezug auf die Zeichnung beschrieben, die zeigt:
- Fig. 1(a) bis (d): eine schematische Darstellung eines ersten Ausführungsbeispiels des Trägers der Arbeitsplattform in einem Hexapod-Bearbeitungszentrum in Raumansicht (a), Unteransicht (b), Vorderansicht (c) und Seitenansicht (d),
- Fig. 2(a) bis (d): eine schematische Darstellung eines zweiten Ausführungsbeispiels der Aufhängung der Arbeitsplattform eines Hexapod-Bearbeitungszentrums in Raumansicht (a), Unteransicht (b), Vorderansicht (c) und Seiten ansicht (d),
- Fig. 3(a) bis (d): ein Hexapod-Bearbeitungszentrum in Form einer Werkzeugmaschine mit dreieckiger Grundfläche, in Raumansicht (a), Draufsicht (b), Seitenansicht, (c) und Vorderansicht (d),
- Fig. 4(a) bis (d): ein Hexapod-Bearbeitungszentrum in Form einer Werkzeugmaschine mit viereckiger Grundfläche, in Raumansicht (a), Draufsicht (b), Seitenansicht (c) und Vorderansicht (d),
- Fig. 5(a) bis (d): den Fachwerkaufbau des Gestells einer Werkzeugmaschine nach Fig. 3, in Raumansicht (a), Draufsicht (b), Seitenansicht (c) und Vorderansicht (d),
- Fig. 6(a) bis (d): eine Werkzeugmaschine nach Fig. 3 mit im wesentlichen zylindrischer Arbeitsplattform, in Raumansicht (a), Draufsicht (b), Seitenansicht (c) und Vorderansicht (d), und
- Fig. 7(a) bis (d): eine Werkzeugmaschine nach Fig. 4 mit im wesentlichen zylindrischer Arbeitsplattform. in Raumansicht (a), Draufsicht (b), Seitenansicht (c) und Vorderansicht (d).

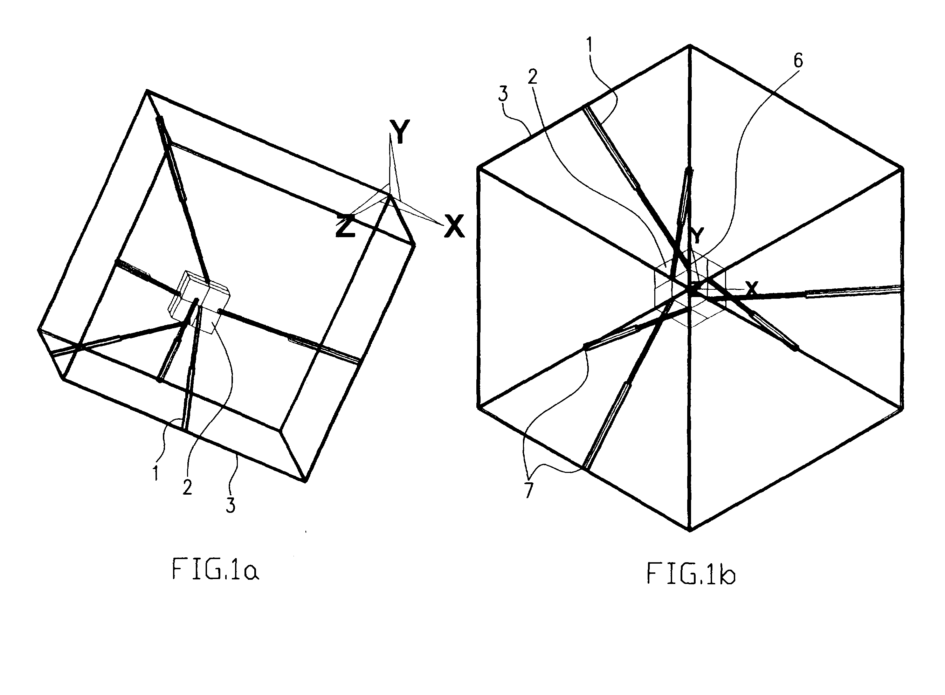

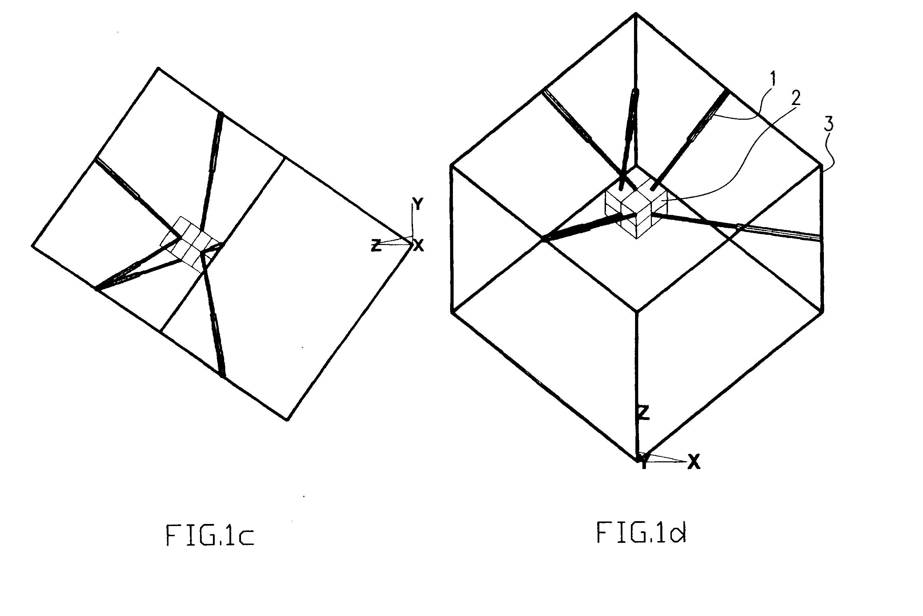

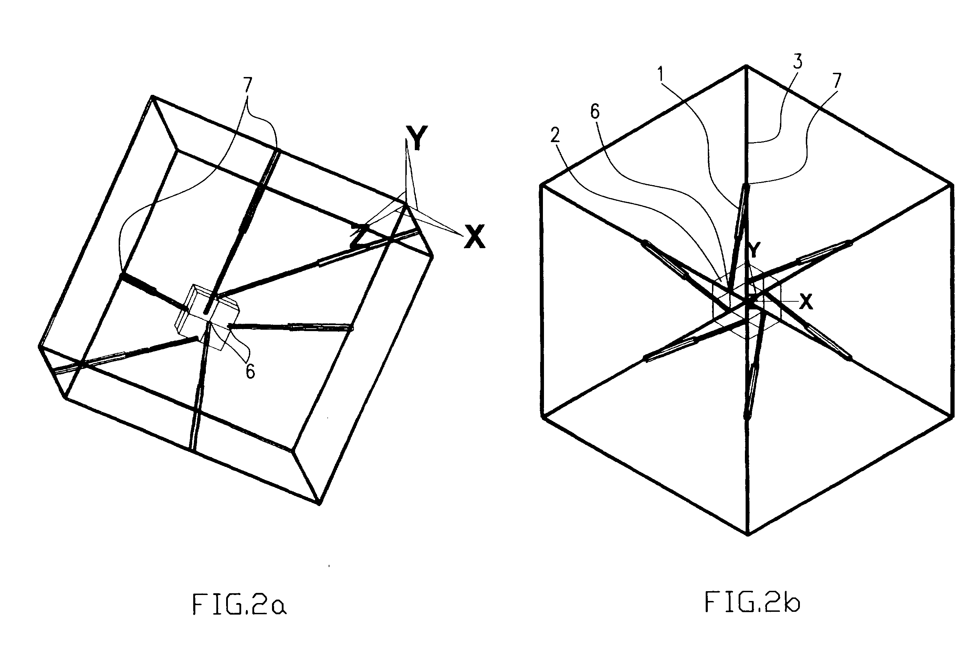

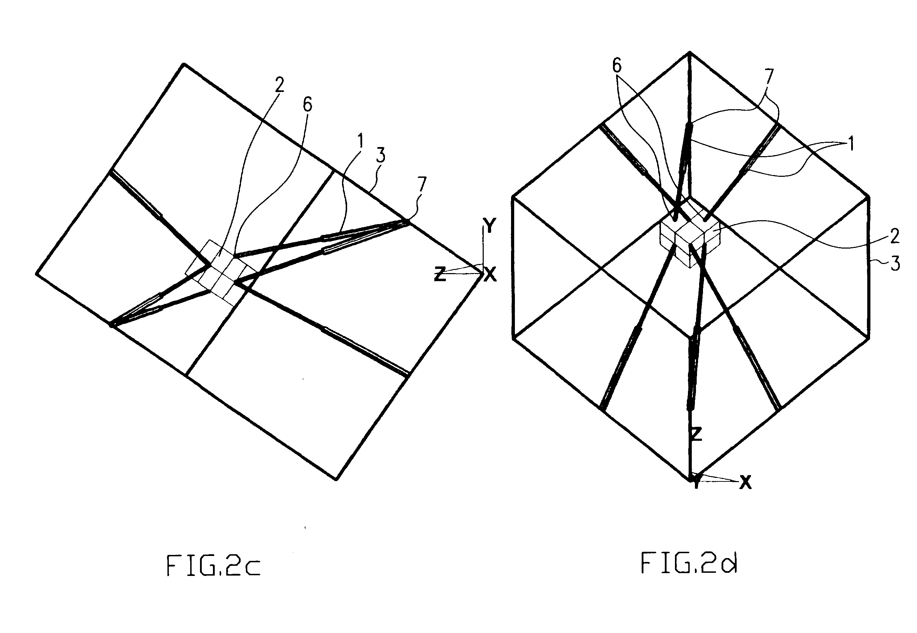

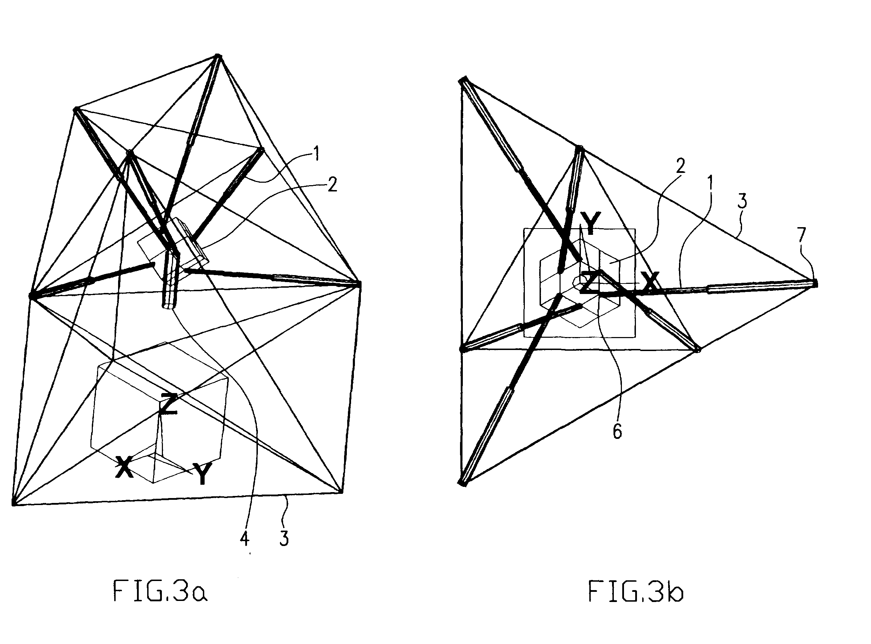

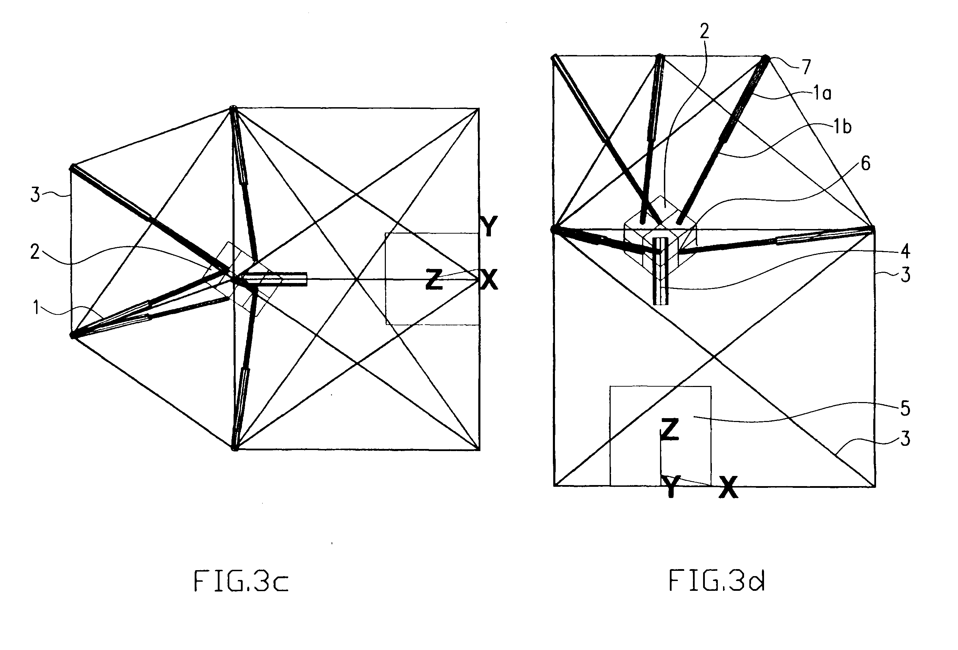

Im folgenden wird nun zuerst die Aufhängung des Trägers 2 an dem Gestell 3 anhand der Fig. 1 und 2 beschrieben, wie sie bei den in den Fig. 3 bis 7 gezeigten Werkzeugmaschinen realisiert werden kann.

Der in den Ausführungsbeispielen als Arbeitsplattform ausgebildete Träger 2 ist über sechs Streben 1 an dem Gestell 3 aufgehängt. Die einzelnen Streben bestehen dabei aus einem festen und einem ausfahrbaren Teil. Sie können als Hydraulik- oder Pneumatikzylinder oder auch als Wälzschraubtrieb ausgebildet werden. In der gezeigten Ausführungsform ist der ausfahrbare Teil jeweils an der Arbeitsplattform angelenkt. In Fig. 1 ist zur Veranschaulichung der räumlichen Lage der Anlenkpunkte die Arbeitsplattform 2 in Form eines Würfels dargestellt, der wiederum in einem würfelförmigen Gestell 3 aufgehängt ist. Die konkrete konstruktive Ausführung der Arbeitsplattform und des Gestells ist jedoch nicht auf streng geometrische Raumformen wie Würfel oder Quader beschränkt. Wie Fig. 1 zu entnehmen ist, definieren jeweils drei Anlenkpunkte der Streben an der Arbeitsplattform 2 eine gemeinsame Angriffsebene, so daß insgesamt zwei separate Angriffsebenen gebildet werden. Im gezeigten Fall erfolgt die Anlenkung der Arbeitsplattform 2 über die sechs Flächenmittelpunkte des gedachten Würfels. Hierdurch ergeben sich durch jeweils drei Anlenkpunkte gebildete, voneinander beabstandete Anlenkebenen an der Arbeitsplattform. Bei einer Anordnung der Hauptspindelachse in senkrechter Richtung zu den beiden Ebenen ergibt sich eine besonders gute Stabilisierung der Spindelachse. Einander gegenüberliegende Flächenmittelpunkte des gedachten Würfels sind durch die Streben mit parallelen Außenkanten des gedachten Würfels des Gestells 3 verbunden. In der konkreten Ausführungsform nach Fig. 1 handelt es sich hierbei um benachbarte Außenkanten des gedachten Gestellwürfels. Die in Fig. 2 gezeigte Ausführungsform unterscheidet sich von der in Fig. 1 gezeigten nur dadurch, daß die Anlenkung einander gegenüberliegender Streben an dem Gestellwürfel an einander gegenüberliegender Außenkanten des Gestellwürfels erfolgt. In beiden Fällen definieren jeweils drei Anlenkpunkte an dem Gestell eine gemeinsame Angriffsebene, so daß insgesamt zwei separate Angriffsebenen gebildet werden.

Durch diese Anordnung der Anlenkpunkte kann für jeweils einander gegenüberliegende Streben 1 der Berechnungsaufwand zur Ansteuerung der Bewegung der einzelnen Streben bei einer Bewegung der Arbeitsplattform reduziert werden. Zudem wird hierdurch eine gleichmäßige Kraftaufnahme möglich. Da durch die Anordnung der Anlenkpunkte an der Arbeitsplattform 2 eine Abstützung durch die Streben 1 in Richtung der Hauptbelastung erfolgt, besitzt das Hexapod-Bearbeitungszentrum eine besonders hohe strukturelle Steifigkeit, so daß hohe Fertigungsgenauigkeiten erzielt werden können, bzw. die einzelnen Streben kompakter dimensioniert werden können.

Da sich durch die Anlenkung der Streben an der Arbeitsplattform in mehreren Angriffsebenen der konstruktive Gestaltungspielraum erhöht, kann eine kompaktere Bauweise der Arbeitsplattform sowie eine höhere Beweglichkeit, insbesondere in den rotatorischen Freiheitsgraden, erzielt werden. Die einzelnen Aufhängungsmodi von Strebenpaaren an benachbarten bzw. gegenüberliegenden Außenkanten des gedachten Gestellwürfels können auch miteinander kombiniert werden.

Die Anlenkung der Streben 1 erfolgt über Gelenke wie z.B. Kugel- oder Kardangelenke.

In Fig. 3 ist ein Hexapod-Bearbeitungszentrum in Form einer Werkzeugmaschine dargestellt. Das Gestell 3 ist dabei als Fachwerkkonstruktion ausgebildet und weist eine dreieckige Grundfläche auf. An dem Gestell 3 ist ein feststehender Werkzeugtisch 5 vorgesehen. In der gezeigten Ausführungsform ist an der Arbeitsplattform 2 eine in Vertikalrichtung ausgerichtete Hauptspindel 4 vorgesehen, die oberhalb des Werkzeugtisches 5 angeordnet ist. Die Hauptspindel erstreckt sich dabei in Richtung einer Diagonalen des gedachten Würfels der Arbeitsplattform. Durch eine entsprechende Anpassung des Gestells kann bei Beibehaltung der Abstützungsgeometrie der Arbeitsplattform 2 die Hauptspindel in jeder beliebigen Raumrichtung orientiert werden.

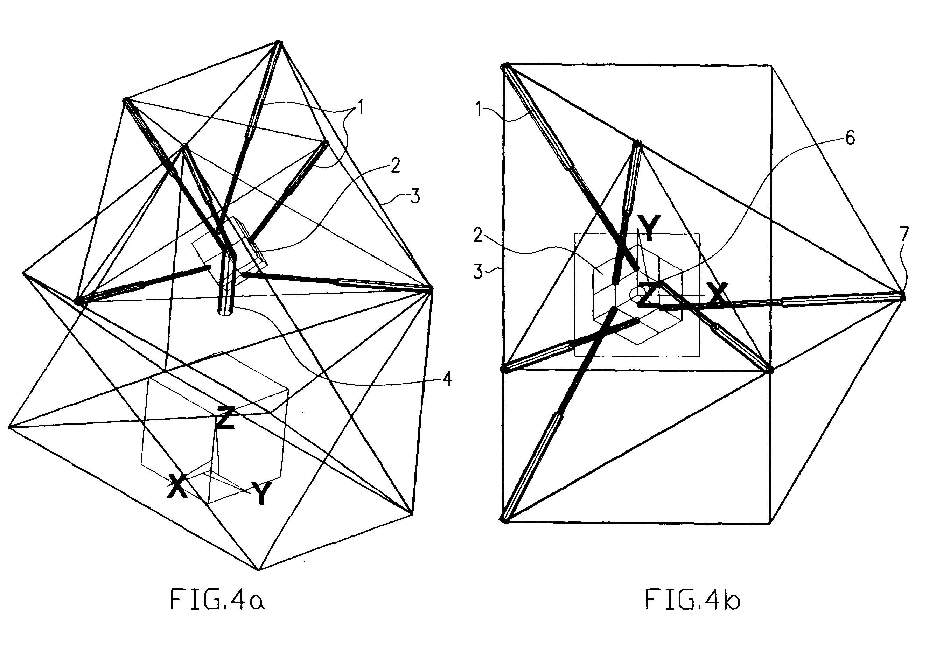

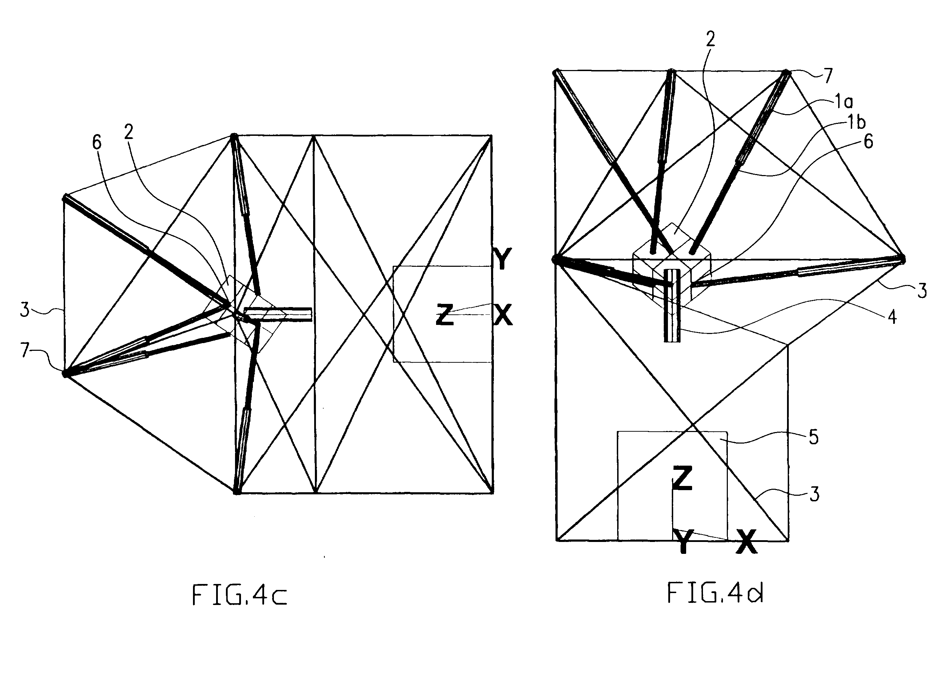

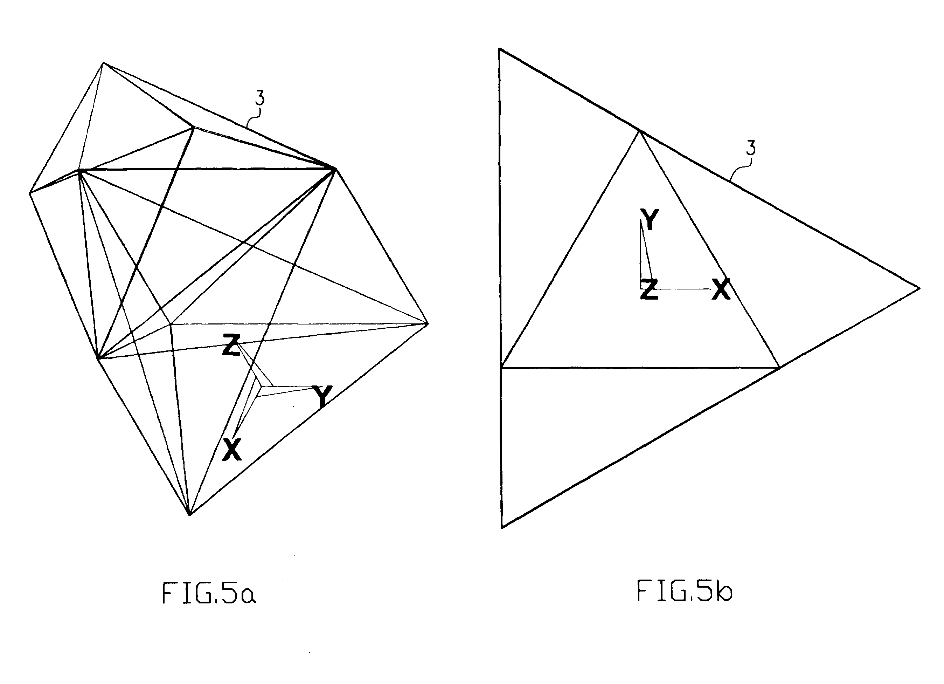

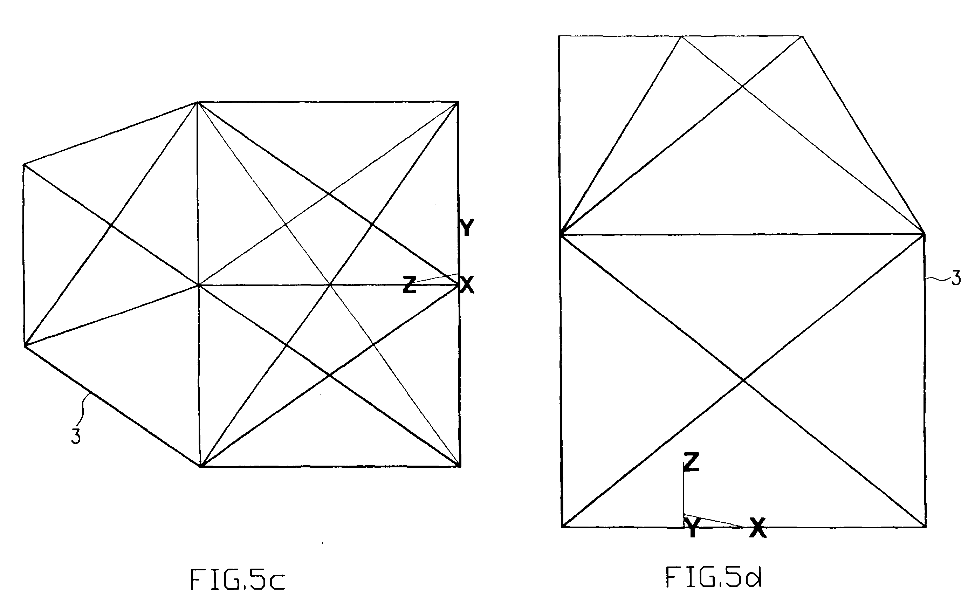

Alternativ zu einer dreieckförmigen Grundfläche der Fachwerkstruktur kann, wie in Fig. 4 gezeigt, auch eine viereckige Grundfläche vorgesehen werden. Über die Fachwerkanordnung werden die einzelnen Gelenkpunkte des Gestells 3 auch mit einer Fundamentierung verbunden. Grundsätzlich können Teile des Gestells auch in herkömmlicher Weise in Form eines Gehäuses ausgeführt werden. Eine Fachwerkanordnung bietet jedoch den Vorteil einer optimalen Zugänglichkeit zu dem darin angeordneten Werkzeugtisch 5 und Bearbeitungsraum. Eine Darstellung lediglich der Fachwerkstruktur für eine Werkzeugmaschine mit dreiekkiger Grundfläche ist der Fig. 5 zu entnehmen.

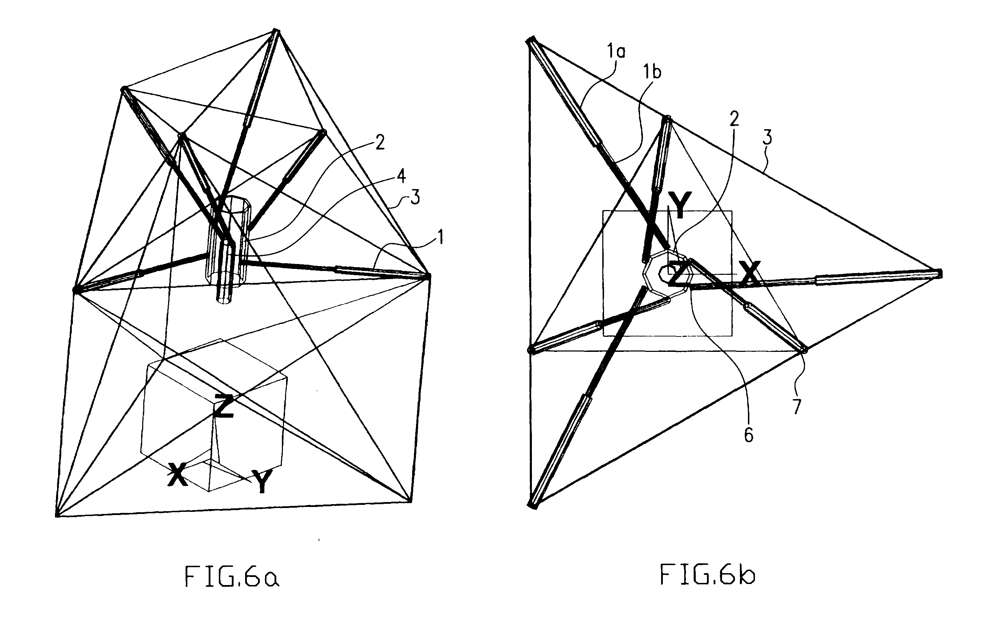

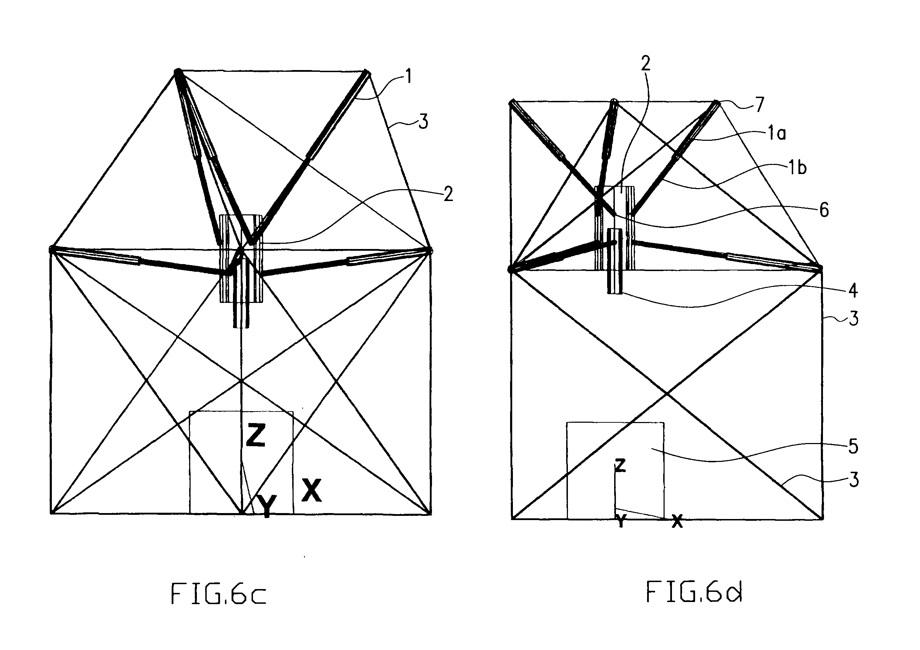

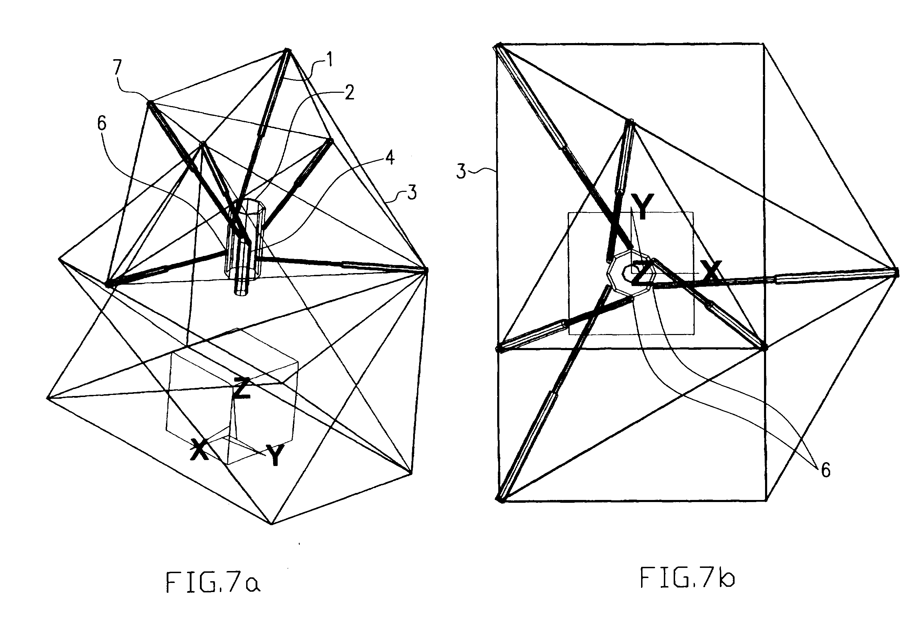

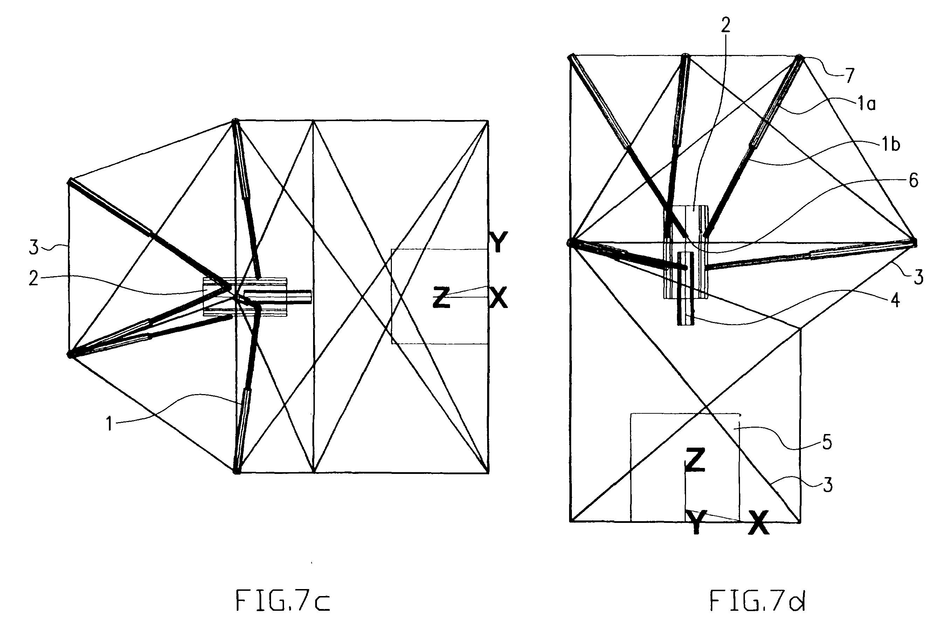

Die Fig. 6 und 7 zeigen besondere Ausführungsformen der in den Fig. 3 und 4 allgemeiner dargestellten Werkzeugmaschinen, insbesondere hinsichtlich der Ausführung der Arbeitsplattform 2. Diese ist in den Fig. 6 und 7 im wesentlichen als Zylinderkörper ausgebildet, der entlang seiner Längsachse die Hauptspindel 4 trägt. Die Anlenkung der Streben 1 an der zylindrischen Arbeitsplattform 2 erfolgt dabei in zwei in der Figur übereinanderliegenden und deutlich voneinander beabstandeten parallelen Ebenen, zu denen die Achse der Hauptspindel 4 senkrecht verläuft. Die Anlenkpunkte der Streben der in der Figur oberen Ebene sind wiederum in einer gemeinsamen oberen Ebene an dem Gestell 3 angeordnet, während die Gestellanlenkpunkte der Streben der unteren Ebene wiederum in einer entsprechenden gemeinsamen Ebene an dem Gestell 3 angeordnet sind. Die Neigung der oberen Streben bezüglich einer Normalebene zu der Hauptspindelachse ist dabei umgekehrt zu der Neigung der unteren Streben in einer zentralen Ruhestellung der Arbeitsplattform 2. Dabei sind die oberen Streben zur Aufnahme von Axialkräften in Richtung der Hauptspindelachse steiler angestellt als die unteren Streben, die vornehmlich zur Radialabstützung bezüglich der Hauptspindelachse dienen. Je flacher die Seitenabstützung erfolgt, desto stärker kann die Arbeitsplattform 2 in Fig. 6 und 7 um eine Horizontalachse verschwenkt werden. Die steilere Neigung der oberen Streben gegenüber den unteren Streben bleibt bei einem Bewegen der Arbeitsplattform 2 in Richtung des Werkzeugtisches 5 erhalten. Vorzugsweise ist der Winkel der unteren Streben bezüglich der XY-Ebene ausgehend von dem jeweiligen Gelenk am Träger 2 negativ oder maximal 0 Grad.

## Patentansprüche

1. Hexapod-Bearbeitungszentrum mit einem feststehenden Gestell (3) und mit einem Träger (2), die über sechs in ihrer Länge verstellbare Streben (1) miteinander verbunden sind, wobei an dem Träger (2) sechs separate Anlenkpunkte für die Streben vorgesehen sind, **dadurch gekennzeichnet,** daß drei Anlenkpunkte von drei Streben (1) an dem Träger (2) eine erste Angriffsebene bilden, und die drei Anlenkpunkte der drei weiteren Streben (1) an dem Träger (2) eine weitere, separate Angriffsebene bilden, wobei die beiden Angriffsebenen voneinander beabstandet sind, und daß die Anlenkpunkte von drei Streben (1) der ersten Trägerangriffsebene an dem Gestell (3) eine Angriffsebene bilden und die Anlenkpunkte der drei Streben der weiteren Trägerangriffsebene eine weitere separate Angriffsebene an dem Gestell bilden, wobei die erste Gestellangriffsebene auf der Seite zu der weiteren Gestellangriffsebene liegt, wie die erste Trägerangriffsebene zu der weiteren Trägerangriffsebene.

2. Hexapod-Bearbeitungszentrum nach Anspruch 1, **dadurch gekennzeichnet,** daß die Anlenkpunkte (6) der Streben (1) an dem Träger (2) auf einem gedachten räumlichen Vielflächner, vorzugsweise einem Würfel oder einer gedachten Kugel, angeordnet sind.

3. Hexapod-Bearbeitungszentrum nach Anspruch 2, **dadurch gekennzeichnet,** daß auf jeder der sechs Flächen eines gedachten Würfels ein Anlenkpunkt (6) an dem Träger (2) vorgesehen ist.

4. Hexapod-Bearbeitungszentrum nach Anspruch 3, **dadurch gekennzeichnet,** daß die Anlenkpunkte (6) jeweils im Flächenmittelpunkt des gedachten Würfels angeordnet sind.

5. Hexapod-Bearbeitungszentrum nach einem der Ansprüche 1 bis 4, **dadurch gekennzeichnet,** daß die Anlenkpunkte (6) der Streben (1) an dem Gestell (3) jeweils an je einer Außenkante eines räumlichen Vielflächners, vorzugsweise eines gedachten Würfels oder einer gedachten Kugel, angeordnet sind.

6. Hexapod-Bearbeitungszentrum nach Anspruch 5, **dadurch gekennzeichnet,** daß die Anlenkpunkte (6) an dem Träger (2) an gegenüberliegenden Flächen des Trägers (2) über jeweils eine Strebe (1) mit je einem Anlenkpunkt (7) an parallelen Außenkanten des Gestells (3) verbunden sind.

7. Hexapod-Bearbeitungszentrum nach einem der Ansprüche 1 bis 6, **dadurch gekennzeichnet,** daß das Gestell (3) mit den Anlenkpunkten (7) für die Streben (1) als Fachwerkanordnung ausgebildet ist.

8. Hexapod-Bearbeitungszentrum nach Anspruch 7, **dadurch gekennzeichnet,** daß die Anlenkpunkte (7) mit einer Fundamentierung durch die Fachwerkanordnung verbunden sind.

9. Hexapod-Bearbeitungszentrum nach einem der Ansprüche 1 bis 8, **dadurch gekennzeichnet,** daß das Gestell (3) eine dreieckige Grundfläche aufweist.

10. Hexapod-Bearbeitungszentrum nach einem der Ansprüche 1 bis 8, **dadurch gekennzeichnet,** daß das Gestell (3) eine viereckige Grundfläche aufweist.

11. Hexapod-Bearbeitungszentrum nach einem der Ansprüche 1 bis 10, **dadurch gekennzeichnet,** daß der Träger (2) eine Hauptspindel (4) aufweist, deren Längsachse die beiden Angriffsebenen der Anlenkpunkte des Trägers (2) schneidet.

12. Hexapod-Bearbeitungszentrum nach einem der Ansprüche 1 bis 11, **dadurch gekennzeichnet,** daß der Träger (2) eine Hauptspindel (4) aufweist, die entlang einer Hauptdiagonalen des Trägers (2) verläuft.

13. Hexapod-Bearbeitungszentrum nach einem der Ansprüche 11 oder 12, **dadurch gekennzeichnet,** daß die Hauptspindel (4) in einer Ruhestellung des Trägers (2) parallel zu einer Z-Achse eines Werkstückkoordinatensystems ausgerichtet ist.

14. Hexapod-Bearbeitungszentrum nach einem der Ansprüche 1 bis 13, **dadurch gekennzeichnet,** daß die Streben (1) in der Hauptbelastungsrichtung des Trägers angeordnet sind.

## Claims

1. A hexapodal machining centre comprising a stationary frame (3) and a support (2), which are interconnected by six struts (1) of adjustable length, the support (2) having provided thereon six separate articulation points for the struts, **characterized in** that three articulation points of three struts (1) on the support (2) define a first plane of application and the three articulation points of the three further struts (1) on the support (2) define a further separate plane of application, the two planes of application being spaced from one another, and that the articulation points of three struts (1) of the first plane of application on the support define a plane of application on the frame (3) and the articulation points of the three struts of the further plane of application on the support define a further separate plane of application on the frame, wherein the first plane of application on the frame lies on that side with respect to said further plane of application on the frame, as the first plane of application on the support lies with respect to the further plane of application on the support.

2. A hexapodal machining centre according to claim 1, **characterized in** that the articulation points (6) of the struts (1) on the support (2) are arranged on an imaginary three-dimensional polyhedron, preferably a cube or an imaginary sphere.

3. A hexapodal machining centre according to claim 2, **characterized in** that each of the six faces of an imaginary cube has provided thereon an articulation point (6) on the support (2).

4. A hexapodal machining centre according to claim 3, **characterized in** that the articulation points (6) are arranged at the respective face centres of said imaginary cube.

5. A hexapodal machining centre according to one of the claims 1 to 4, **characterized in** that the articulation points (6) of the struts (1) on the frame (3) are arranged on a respective outer edge of a three-dimensional polyhedron, preferably an imaginary cube or an imaginary sphere.

6. A hexapodal machining centre according to claim 5, **characterized in** that each of the articulation points (6) on the support (2) on opposed surfaces of said support (2) is connected via a respective strut (1) to an articulation point (7) on parallel outer edges of the frame (3).

7. A hexapodal machining centre according to one of the claims 1 to 6, **characterized in** that the frame (3) with the articulation points (7) for the struts (1) is implemented as a framework arrangement.

8. A hexapodal machining centre according to claim 7, **characterized in** that the articulation points (7) are connected to a foundation via the framework arrangement.

9. A hexapodal machining centre according to one of the claims 1 to 8, **characterized in** that the frame (3) has a triangular base area.

10. A hexapodal machining centre according to one of the claims 1 to 8, **characterized in** that the frame (3) has a quadrangular base area.

11. A hexapodal machining centre according to one of the claims 1 to 10, **characterized in** that the support (2) is provided with a main spindle (4) whose longitudinal axis intersects the two planes of application of the articulation points of the support (2).

12. A hexapodal machining centre according to one of the claims 1 to 11, **characterized in** that the support (2) is provided with a main spindle (4) extending along a main diagonal of said support (2).

13. A hexapodal machining centre according to one of the claims 11 or 12, **characterized in** that, at a position of rest of the support (2), the main spindle (4) is orientated parallel to a Z-axis of a workpiece coordinate system.

14. A hexapodal machining centre according to one of the claims 1 to 13, **characterized in** that the struts (1) are arranged in the main-load direction of the support.

## Revendications

1. Centre d'usinage en hexapode avec un bâti fixe (3) et avec un support (2), qui sont reliés ensemble par six entretoises (1) ajustables en longueur, dans lequel sont prévus, sur le support (2), six points d'articulation séparés pour les entretoises, caractérisé en ce que trois points d'articulation de trois entretoises (1) forment sur le support (2) un premier plan d'attaque, et les trois points d'articulation des trois autres entretoises (1) forment sur le support (2) un autre plan d'attaque séparé, les deux plans d'attaque se trouvant à distance l'un de l'autre, et en ce que les points d'articulation de trois entretoises (1) du premier plan d'attaque du support forment un plan d'attaque sur le bâti (3) et les points d'articulation des trois entretoises de l'autre plan d'attaque du support forment un autre plan d'attaque séparé sur le bâti, le premier plan d'attaque du bâti se situant sur le côté par rapport à l'autre plan d'attaque du bâti, comme le premier plan d'attaque du support par rapport à l'autre plan d'attaque du support.

2. Centre d'usinage en hexapode selon la revendication 1, caractérisé en ce que les points d'articulation (6) des entretoises (1) sont disposés sur le support (2) sur un polyèdre tridimensionnel imaginaire, de préférence un cube ou une sphère imaginaire.

3. Centre d'usinage en hexapode selon la revendication 2, caractérisé en ce que sur chacune des six faces d'un cube imaginaire est prévu un point d'articulation (6) sur le support (2).

4. Centre d'usinage en hexapode selon la revendication 3, caractérisé en ce que les points d'articulation (6) sont disposés à chaque fois au centre des surfaces du cube imaginaire.

5. Centre d'usinage en hexapode selon l'une des revendications 1 à 4, caractérisé en ce que les points d'articulation (6) des entretoises (1) sont disposés sur le bâti (3) à chaque fois sur, chacun, une arête externe d'un polyèdre tridimensionnel, de préférence d'un cube imaginaire ou d'une sphère imaginaire.

6. Centre d'usinage en hexapode selon la revendication 5, caractérisé en ce que les points d'articulation (6) sont reliés sur le support (2) à des surfaces opposées du support (2) par, à chaque fois, une entretoise (1) avec chacune un point d'articulation (7) sur des arêtes externes parallèles du bâti (3).

7. Centre d'usinage en hexapode selon l'une des revendications 1 à 6, caractérisé en ce que le bâti (3) avec les points d'articulation (7) pour les entretoises (1) est conçu sous forme d'un dispositif de charpente.

8. Centre d'usinage en hexapode selon la revendication 7, caractérisé en ce que les points d'articulation (7) sont reliés à une fondation par le dispositif de charpente.

9. Centre d'usinage en hexapode selon l'une des revendications 1 à 8, caractérisé en ce que le bâti (3) présente une surface de base triangulaire.

10. Centre d'usinage en hexapode selon l'une des revendications 1 à 8, caractérisé en ce que le bâti (3) présente une surface de base quadrangulaire.

11. Centre d'usinage en hexapode selon l'une des revendications 1 à 10, caractérisé en ce que le support (2) présente un arbre moteur (4), dont l'axe longitudinal coupe les deux plans d'attaque des points d'articulation du support (2).

12. Centre d'usinage en hexapode selon l'une des revendications 1 à 11, caractérisé en ce que le support (2) présente un arbre moteur (4) qui passe le long d'une diagonale principale du support (2).

13. Centre d'usinage en hexapode selon l'une des revendications 11 ou 12, caractérisé en ce que l'arbre moteur (4) est orienté dans une position de repos du support (2) parallèlement à un axe Z d'un système de coordonnées de la pièce à usiner.

14. Centre d'usinage en hexapode selon l'une des revendications 1 à 13, caractérisé en ce que les entretoises (1) sont disposées dans le sens de charge principal du support.
